# EUROPEAN PATENT APPLICATION

(11) **EP 3 825 257 A1**
(43) Date of publication of application: **26.05.2021**
(21) Application number: 20209184.9
(22) Date of filing: 23.11.2020
(51) Int. Cl.: B65G 1/00, B65G 29/02

(54) **PALLET LOADER FOR AUTOMATED STORAGE AND RETRIEVAL SYSTEM**

(30) Priority: 21.11.2019 GB 201916955
(71) Applicant: Moffett Automated Storage Limited, Monaghan (IE)
(72) Inventor: Moffett, Sam, Monaghan, County Monaghan (IE)
(74) Representative: Schütte, Gearoid

(57) **Abstract**

A pallet loader (1) for an automated storage and retrieval system is for mounting adjacent an infeed conveyor (2) of the automated storage and retrieval system for loading a pallet (3) onto the infeed conveyor (2). The pallet loader (1) has a ground engaging base support (5) for mounting alongside the infeed conveyor (2). A pallet carrier plate (6) is connected to the base support (5) by a pivoting swing arm (7) which is operable to move the pallet carrier plate (6) between a lowered ground-engaging position alongside the infeed conveyor (2) and a raised conveyor loading position over the conveyor (2) for depositing the pallet (3) on the conveyor (2).

## Description

This invention relates to an automated storage and retrieval system for the storage and retrieval of goods in a warehouse or distribution centre, and in particular to a pallet loader for delivering pallets into, and retrieval of pallets from, the system.

### Background to the Invention

Automated storage and retrieval systems are well known and generally comprise a three-dimensional lattice framework defining a plurality of storage bays for reception of goods on pallets. A robotic load hander is movable through the framework on a rail system to deliver pallets to a storage bay in the system and to retrieve a pallet from any storage bay in the system. At a base of the system, typically an infeed conveyor is provided to deliver a pallet into the system and to receive pallets which are to be removed from the system. In many warehouses, a forklift truck is used to load the pallets on the infeed conveyor. It will be appreciated that use of a forklift truck requires a licenced driver who must be trained in the operation of the forklift truck. This is not always convenient for the owner of the warehouse, particularly with smaller warehouses.

The present invention is directed towards overcoming this problem.

KR20150065257 A discloses a pallet loader with a scissors type lifting mechanism to raise a pallet into an elevated position for transfer to a conveyor. US 2016/0039619 A1 discloses a workstation to facilitate manually unloading a pallet. DE 19611863 A1 discloses a tilting mechanism for loading/unloading coils on pallets. JPH11199053 A discloses a luggage loading device. JP2003040440 A discloses a pallet loading/unloading mechanism.

### Statements of Invention

According to the invention, there is provided a pallet loader for an automated storage and retrieval system, the pallet loader for mounting adjacent an infeed conveyor of the automated storage and retrieval system for loading a pallet on the infeed conveyor, the pallet loader including a base support for mounting alongside the infeed conveyor, a pallet carrier plate connected to the base support by an operating mechanism which is operable to move the pallet carrier plate between a ground-engaging position alongside the infeed conveyor and a conveyor loading position for depositing a pallet on the infeed conveyor. Advantageously a powered pallet truck can be used with the pallet loader for loading a pallet on the infeed conveyor instead of a forklift truck. A licenced and skilled forklift truck driver is no longer required for loading a pallet on the infeed conveyor. This is more convenient for users of the automated storage and retrieval system as all staff can be trained in use of the powered pallet truck and a licence is not required for operation of the powered pallet truck.

In one embodiment of the invention the operating mechanism comprises a swing arm pivotally mounted on the base support and pivotally connected to the pallet carrier plate to maintain the pallet carrier plate in a horizontal orientation throughout movement of the swing arm and an actuator for pivotal movement of the swing arm.

In another embodiment the swing arm has an inner end and an outer end, the inner end being pivotally connected to a pivot mount on the base support and the outer end being pivotally connected to an upstanding mounting flange at a side of the pallet carrier plate.

In another embodiment the operating mechanism is operable to position the pallet carrier plate between a pair of spaced-apart conveyor elements which together form the infeed conveyor in the conveyor loading position to deposit a pallet on the conveyor elements.

In another embodiment the pallet carrier plate locates in a complementary opening in the base support when in the ground-engaging position.

In another embodiment the actuator comprises a ram mounted between a pivot mount on the base support and a pivot connector on the swing arm between the inner end and the outer end of the swing arm.

In another embodiment a stop rail associated with the pallet carrier plate is mounted at an opposite side of the infeed conveyor to the pallet carrier plate, the stop rail projecting above the conveyor.

In another embodiment the stop rail is spaced-apart from the infeed conveyor by a distance suitable for centering a pallet on the infeed conveyor when the pallet abuts the stop rail.

In another embodiment the base support mounts adjacent the infeed conveyor with pivot axes at inner and outer ends of the swing arm parallel to the direction of travel of the conveyor.

### Brief Description of the Drawings

The invention will be more clearly understood by the following description of some embodiments thereof, given by way of example only, with reference to the accompanying drawings, in which:
Fig. 1 is a perspective view of a pallet loader according to the invention shown mounted in use adjacent an infeed conveyor of an automated storage and retrieval system;
Fig. 2 is a perspective view of the pallet loader, similar to Fig. 1, but showing the pallet loader in another position of use;
Fig. 3 is an elevational view of the pallet loader, corresponding to the position shown in Fig. 1; and
Fig. 4 is an elevational view of the pallet loader, corresponding to the operating position shown in Fig. 2.

### Detailed Description of the Preferred Embodiments

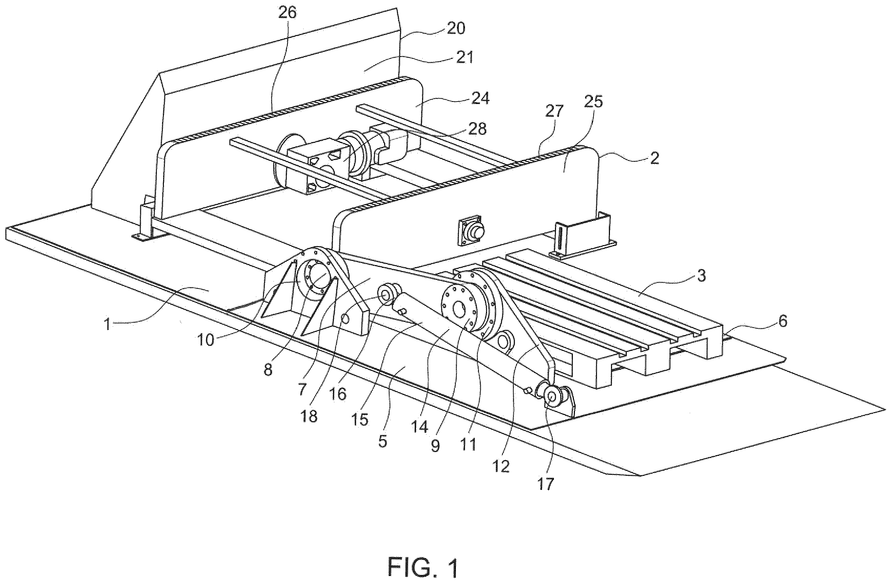

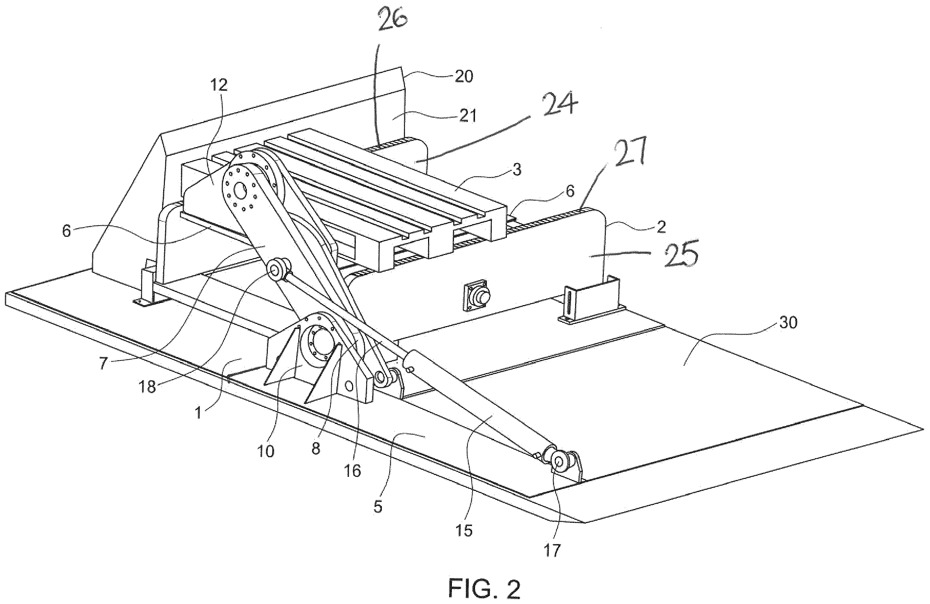

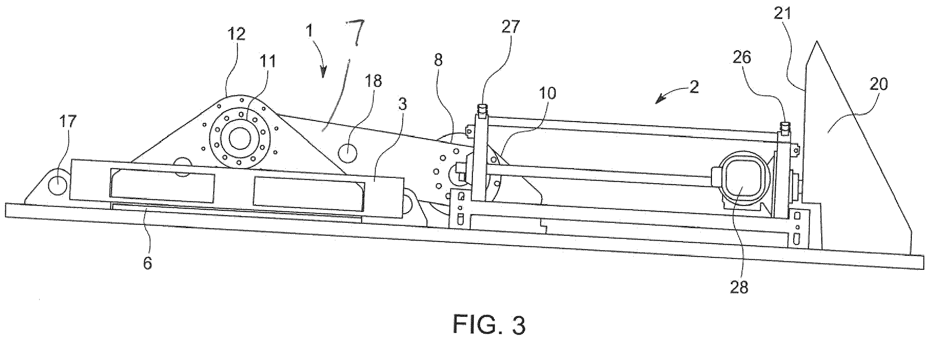

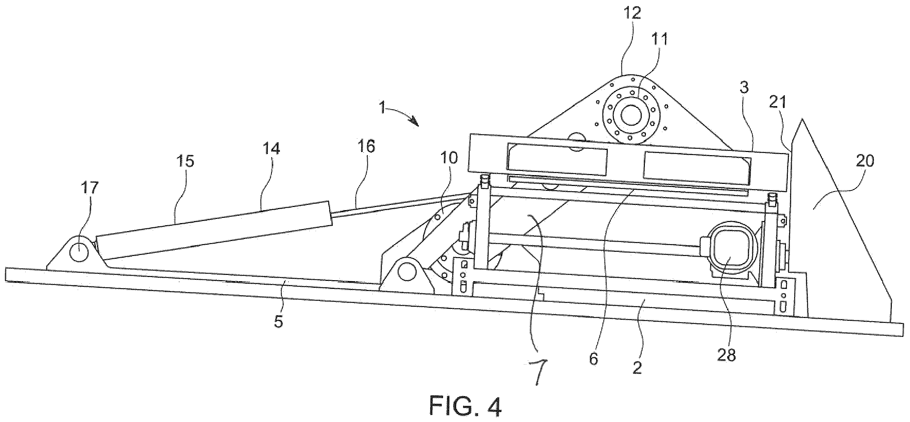

Referring to the drawings, there is shown a pallet loader according to the invention, indicated generally by the reference numeral 1, for an automated storage and retrieval system. The pallet loader 1 is for mounting adjacent an infeed conveyor 2 of the automated storage and retrieval system for loading a pallet 3 on the infeed conveyor 2. The pallet loader 1 has a base support 5 for mounting alongside the infeed conveyor 2. A pallet carrier plate 6 is connected to the base support 5 by an operating mechanism comprising a swing arm 7 which is operable to move the pallet carrier plate 6 between a lowered ground-engaging position alongside the infeed conveyor 2 as shown in Fig. 1 and Fig. 3, and a raised conveyor loading/unloading position for depositing the pallet 3 on the conveyor 2 or removing the pallet 3 from the conveyor 2, as shown in Fig. 2 and Fig. 4.

The swing arm 7 has an inner end 8 and an outer end 9. The inner end 8 is pivotally connected to a pivot mount 10 on the base support 5. The outer end 9 is pivotally connected by a pivot connector 11 to an upstanding mounting flange 12 at a side of the pallet carrier plate 6. The mounting flange has a triangular shape, a base of which extends along the side of the pallet carrier plate 6 and the pivot connector 11 is located adjacent the apex at a top of the mounting flange 12. The mounting flange 12 projects upwardly perpendicular to the horizontal pallet carrier plate 6. The pivot connector 11 is centrally mounted on the pallet carrier plate 6 and has a pivot axis parallel to the pallet carrier plate 6 and operates such that the pallet carrier plate 6 is maintained in a horizontal orientation throughout pivoting movement of the swing arm 7.

A ram 14 having a cylinder 15 and associated piston rod 16 is mounted between the base support 5 and the swing arm 7 and is operable for pivotal movement of the swing arm 7 on the base support 5. An outer end of the cylinder 15 is connected to the base support 5 by a pivot mount 17. A free end of the piston rod 16 is connected to the swing arm 7 by a pivot connector 18. The ram 14 may be pneumatically or hydraulically operated. Other types of actuator for pivoting the swing arm on the base support 5 may be provided instead of the ram 14.

A stop rail 20 associated with the pallet carrier plate 6 is mounted at an opposite side of the infeed conveyor 2 to the pallet carrier plate 6. The stop rail 20 projects upwardly above the conveyor 2 and has a front face 21 against which the pallet 3 can abut to align the pallet 3 on the conveyor 2 and prevent overshoot of the pallet 3. The stop rail 20 is spaced-apart from the infeed conveyor 2 by a distance suitable for centering a pallet 3 on the infeed conveyor 2 when the pallet 3 abuts the stop rail 20, as shown in Fig. 4.

The infeed conveyor 2 has a pair of spaced-apart conveyor elements 24, 25 with conveyor chains 26, 27 driven by a reversible drive motor 28 for feeding a pallet 3 mounted across the chains 26, 27, either into or out of the automated storage and retrieval system. The two conveyor elements 24, 25 together form the infeed conveyor 2.

It will be noted that the spacing of the conveyor elements 24, 25 is such that the pallet 3 projects outwardly at each side of the conveyor 2, the stop 20 ensuring correct positioning of the pallet 3 on the conveyor 2. It will be noted also that the size of the pallet carrier plate 6 is such that it can fit down between the conveyor elements 24, 25 in the conveyor loading position, as shown in Fig. 4, so that it releases from an underside of the pallet 3 which can then be moved by the chains 26, 27 into the automated storage and retrieval system. The ram 14 can then be operated to return the pallet carrier plate 6 to the initial ground-engaging position shown in Fig. 1 and Fig. 3.

A complementary opening 30 is provided in the base support 5 for reception of the pallet carrier plate 6 when it is in the ground-engaging position.

In use, a pallet 3 is simply placed on the pallet carrier plate 6 as shown in Fig. 1, The ram 14 is extended to pivot the swing arm 7 on the base support 5 lifting up the pallet carrier plate 6 with the pallet 3 thereon and placing the pallet 3 on the infeed conveyor 2 as shown in Fig. 2, the pallet 3 projecting outwardly at opposite sides of the conveyor elements 24, 25. The pallet 3 is deposited on the infeed conveyor 2, spanning across the chains 26, 27. A slight further extension of the ram 14 continues pivoting of the swing arm 7 and drops the pallet carrier plate 6 downwardly, away from and below the pallet 3, nesting between the conveyor elements 24, 25. The infeed conveyor 2 can then be operated to deliver the pallet 3 into the storage framework of the automated storage and retrieval system. Removal of the pallet 3 allows retraction of the ram 14 to pivot the swing arm 7 back to again position the pallet carrier plate 6 at the base support 5 ready to receive another pallet 3. Alternatively, the carrier plate 6 can await retrieval of another pallet 3 from the storage system and deliver it onto the base support 5 for removal.

It will be appreciated that the pallet loader of the invention advantageously allows the use of a powered pallet truck for loading a pallet 3 on the infeed conveyor 2 or for unloading a pallet 3 from the infeed conveyor 2. This is particularly convenient for warehouse staff and for the warehouse owner who does not have to provide a forklift truck and a trained and licensed forklift truck driver.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. Pallet loader (1) for automated storage and retrieval system, the pallet loader (1) for mounting adjacent an infeed conveyor (2) of the automated storage and retrieval system for loading a pallet (3) on the infeed conveyor (2), the pallet loader (1) including a base support (5) for mounting alongside the infeed conveyor (2), a pallet carrier plate (6) mounted to the base support (5) by an operating mechanism which is operable to move the pallet carrier plate (6) between a ground-engaging position alongside the infeed conveyor (2) and a conveyor loading position for depositing a pallet (3) on the infeed conveyor (2), **characterised in that** the operating mechanism comprises a swing arm (7) pivotally mounted on the base support (5) and pivotally connected to the pallet carrier plate (6) to maintain the pallet carrier plate (6) in a horizontal orientation throughout movement of the swing arm (7), and an actuator for pivotal movement of the swing arm (7).

2. The pallet loader (1) as claimed in claim 1, wherein a pivot connector (11) between the swing arm (7) and the pallet carrier plate (6) has a pivot axis parallel to the pallet carrier plate (6).

3. The pallet loader (1) as claimed in claim 2, wherein the pivot connector (11) is centrally mounted on the pallet carrier plate (6).

4. The pallet loader (1) as claimed in any preceding claim, wherein the swing arm (7) has an inner end (8) and an outer end (9), the inner end (8) being pivotally connected to a pivot mount (10) on the base support (5) and the outer end (9) being pivotally connected to an upstanding mounting flange (12) at a side of the pallet carrier plate (6).

5. The pallet loader (1) as claimed in any preceding claim, wherein the operating mechanism is operable to position the pallet carrier plate (6) between a pair of spaced-apart conveyor elements (24, 25) which form the infeed conveyor (2) in the conveyor loading position to deposit a pallet (3) on the conveyor elements (24, 25).

6. The pallet loader (1) as claimed in any preceding claim, wherein the pallet carrier plate (6) locates in a complementary opening (30) in the base support (5) when in the ground-engaging position.

7. The pallet loader (1) as claimed in preceding claim, wherein the actuator comprises a ram (14) mounted between a pivot mount on the base support (5) and a pivot connector on the swing arm (7) between the inner end (8) and the outer end (9) of the swing arm (7).

8. The pallet loader (1) as claimed in any preceding claim, wherein a stop rail (20) associated with the pallet carrier plate (6) is mounted at an opposite side of the infeed conveyor (2) to the pallet carrier plate (6), the stop rail (20) projecting above the infeed conveyor (2).

9. The pallet loader (1) as claimed in claim 8, wherein the stop rail (20) is spaced-apart from the infeed conveyor (2) by a distance suitable for centering a pallet (3) on the infeed conveyor (2) when the pallet (3) abuts the stop rail (20).

10. The pallet loader (1) as claimed in any preceding claim, wherein the base support (5) mounts adjacent the infeed conveyor (2) with pivot axes at inner and outer ends of the swing arm (7) parallel to the direction of travel of the infeed conveyor (2).
